(19)

Europäisches
Patentamt
European
Patent Office
Office européen
des brevets

(11) **EP 2 009 810 A1**

(12) **EUROPEAN PATENT APPLICATION**

(43) Date of publication:
**31.12.2008 Bulletin 2009/01**

(51) Int Cl.:
***H04B 7/01*** *(2006.01)*

(21) Application number: **07012857.4**

(22) Date of filing: **29.06.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(72) Inventors:
• **Forck, Andreas**
  **13587 Berlin (DE)**
• **Hauslein, Thomas, Dr.**
  **81735 München (DE)**
• **Jungnickel, Volker, Dr.**
  **10318 Berlin (DE)**
• **Schellmann, Malte**
  **10711 Berlin (DE)**

(71) Applicants:
• **Nokia Siemens Networks Oy**
  **02610 Espoo (FI)**
• **Fraunhofer-Gesellschaft zur
  Förderung der angewandten Forschung e.V.
  80686 München (DE)**

(74) Representative: **Bruglachner, Thomas E.**
  **Nokia Siemens Networks GmbH & Co. KG
  Patentabteilung
  Postfach 80 17 60
  81617 München (DE)**

(54) **Method and device for data communication system comprising such device**

(57)    A method and a device for data communication between a first instance and a second instance are provided, wherein the first instance sends a Doppler pilot to the second instance and/or the second instance sends the Doppler pilot to the first instance.

## FIG 1

```
┌─────────────────────────────────┐
│ Measurement of frequency        │
│ dependent ICI by using Doppler  │── 101
│ pilots                          │
└─────────────────────────────────┘
              │
┌─────────────────────────────────┐
│ Cancelling the ICI              │── 102
└─────────────────────────────────┘
              │
┌─────────────────────────────────┐
│ Evaluating the channel transfer │── 103
│ function within the chunk       │
└─────────────────────────────────┘
              │
┌─────────────────────────────────┐
│ Determine channel and           │── 104
│ interference matrix             │
└─────────────────────────────────┘
              │
┌─────────────────────────────────┐
│ Calculation of equalizer matrix │── 105
└─────────────────────────────────┘
              │
┌─────────────────────────────────┐
│ Compensate frequency-shift      │── 106
└─────────────────────────────────┘
```

EP 2 009 810 A1

**Description**

The invention relates to a method and to a device for data communication and to a communication system comprising such a device.

In wireless mobile radio systems increasing bandwidth and mobility requirements have to be satisfied in order to enable connectivity, ideally everywhere with everyone and with every service.

When transmitting information wireless over the air from one transmit antenna to a receive antenna, the quality of the transmission between the transmitter and the receiver strongly depends on the radio wave propagation in the wireless medium. Fading effects caused by multi-path propagation become increasingly frequency-selective if the transmission bandwidth of the system significantly exceeds the coherence bandwidth of the propagation environment.

A common technique to cope with this effect is applying OFDM schemes, according to which the transmission spectrum is sliced into orthogonal sub-bands or sub-carriers with a sub-carrier spacing much smaller than the coherence bandwidth of the channel. The sub-bands then can be processed in parallel as being frequency flat.

Other effects like Center Frequency Offset (CFO) will cause symbol rotations when being detected with standard SISO-OFDM or MIMO-OFDM equalizers. However, such effects can be compensated with a complex backwards rotation by a fixed phase, which can be measured based on appropriate pilot symbols during channel estimation.

When the mobile terminal is moving at (significant) speed (e.g., 50km/h or more), then a Doppler effect shifts the frequency of the sub-carriers due to the relative movement between the transmit antenna and the receive antenna.

When one or both antennas are surrounded by (natural, i.e. real-world) reflectors with different effective reflection angles, the incoming multi-path signals show a whole spectrum of Doppler-shifted frequencies instead of a single Doppler shift. In such case, the overall system performance will deteriorate due to inter-carrier interference (ICI), especially at a very high SNR, as in particular high order modulation (e.g., 64-QAM) is highly susceptible to co-channel interference.

This Doppler spread is in general frequency selective and will cause inter-sub-carrier interference and thus significantly degrade the signal reception of the sub-carriers which are active for data transmission.

In a multi-user scenario, the OFDM spectrum of a single time slot can be shared by several users. Such a scheme is also referred to as Frequency-Division Multiple Access (FDMA) and allows a transmission of data simultaneously to several users or a reception of data also simultaneously from several users.

Considering an up-link from several mobile terminals to a base station, two users can be scheduled on adjacent sub-carriers or sub-carrier blocks in OFDM without them interfering with each other, as long as the Center Frequency Offset (CFO) and the Mobility (Doppler effect resulting from a (significant) movement of the mobile terminal) are small compared to the sub-carrier spacing. The sub-carrier blocks are herein also referred to as resource blocks (RBs).

There exist some concepts as how to handle system degradation based on Doppler effects in OFDM.

One technique is the provision of so-called guard-bands or guard-sub-carriers between modulated sub-carriers. Since the inter-(sub-)carrier-interference (ICI) is mainly existent between adjacent sub-carriers, a significant (high) number of guard sub-carriers can help to separate signals (and hence reduce interference), but at the cost of spectral efficiency as such sub-carriers are left unmodulated.

Another option is the use of more robust low-order modulation schemes like BPSK or QPSK, which can tolerate more co-channel interference than modulation schemes of higher order like 16-QAM or 64-QAM.

The problem to be solved is to overcome the disadvantages as stated before and to provide an approach that allows efficient data communication even in case of a moving communication instance.

This problem is solved according to the features of the independent claims. Further embodiments result from the depending claims.

In order to overcome this problem, a method for data communication between a first instance and a second instance is provided, wherein the first instance sends a Doppler pilot to the second instance and/or the second instance sends the Doppler pilot to the first instance.

Advantageously, said Doppler pilot allows to estimate and effectively compensate frequency shifts in particular if one instance is moving, e.g., at a significant speed.

In an embodiment, the first instance and/or the second instance are network elements, in particular a mobile terminal or a base station.

Hence, the first instance may be a mobile terminal and the second instance may be a base station. The mobile terminal may send the Doppler pilot to the base station. Alternatively or in addition, the base station may provide a Doppler pilot for the mobile terminal.

Data conveyed from the mobile terminal to the base station is also referred to as "uplink" data, whereas data transmitted from the base station to the mobile terminal is referred to as "downlink" data.

In another embodiment, the Doppler pilot is used to at least partially compensate a frequency shift in particular of sub-carriers.

In a further embodiment, the first instance and/or the second instance is/are moving.

In a next embodiment, the method comprises the following steps that may be performed on the first instance and/or on the second instance:

- Measuring of an interference by using the Doppler pilot;
- Calculating an equalizer matrix based on the interference;
- Applying said equalizer matrix to at least partially compensate frequency shifts.

The frequency shifts to be at least partially compensated are in particular frequency shifts of sub-carriers.

It is also an embodiment that sub-carrier blocks are utilized for transmitting the Doppler pilot. Such sub-carrier blocks can be also referred to as Resource Blocks (RBs).

Pursuant to another embodiment, the Doppler pilot is transmitted on neighboring sub-carriers.

This advantageously allows to further compensate frequency shifts in particular when the instance is moving with significant speed. The impact of the Doppler effect to adjacent resource blocks can be (at least partially) compensated in case the Doppler pilot has been transmitted on these resource blocks and the equalizer matrix is calculated based on such information.

The Doppler pilot as referred to herein can comprise at least one signal, preferably several signals or at least a sequence of signals. These signals (as will be discussed) may be used to measure an interference, in particular a frequency-dependent inter-carrier interference (ISI).

According to an embodiment, the Doppler pilot comprises a signal in a frequency domain utilizing BPSK or QPSK modulation.

According to another embodiment, the Doppler pilot is utilized on a spectrum that is occupied by the first instance or by the second instance.

Hence, the Doppler pilot may be (exclusively) sent over the spectrum occupied for the respective communication partner (i.e. first or second instance).

In yet another embodiment, the Doppler pilot is transmitted separately from user data.

This allows to use the Doppler pilot to measure (pure) interference without any additional (user) data disturbing such measurement in the utilized Resource Block.

According to a next embodiment, signals of the Doppler pilot have a spacing of at least two sub-carriers.

Pursuant to yet an embodiment, the amplitude of the Doppler pilot is increased, e.g., by transmitting the signals associated with the Doppler pilot at a higher transmission power, in particular in comparison to the remaining user data conveyed.

This allows an improvement of the interference measurement and hence a better equalization of said frequency shift(s).

According to a further embodiment, the method utilizes a multi-antenna system at the receiving instance. Hence, individually equalized received data streams can be added per sub-carrier according to (individual) channel weights.

It is also an embodiment that the approach described herein is utilized by an OFDM communication system.

The problem stated supra is further solved by a device for data communication comprising a processor unit that is arranged and/or equipped such that the method as described is executable on said processor unit.

In an embodiment said device is a communication device, in particular a mobile terminal or a base station.

The problem stated above is also solved by a communication system comprising the device as described herein.

Embodiments of the invention are shown and illustrated in the following figures:

Fig.1      shows a flow chart comprising steps as how to compensate Doppler spread in case of a moving communication instance;

Fig.2      shows a message chart between a mobile terminal and a base station, wherein the mobile terminal is moving at a significant speed and thereby produces significant Doppler spread to be compensated;

Fig.3      shows a picture illustrating a signal to be used as Doppler pilot;

Fig.4A and Fig.4B      show illustrations of energy distributions within a channel and interference matrix (Fig.4A) and within an equalization matrix (Fig.4B);

Fig.5A and Fig.5B      show received 16-QAM signal constellations without and with ICI-compensation.

The approach presented suggests a procedure to reduce and/or to compensate degrading effects based on Doppler spreading that are in particular caused by a mobility of an instance of a communication system, said instance being in particular a mobile terminal comprising one or more (multiple) antennas.

Regarding an embodiment, it is assumed that adjacent sub-carriers and consecutive OFDM symbols are allocated to particular users of a communication system thereby forming a so-called chunk.

Furthermore, it is assumed that in particular one transmit antenna is transmitting at a certain sub-carrier, implying a multi-user SISO, SIMO or MISO system, where the base station may have several antennas but each mobile terminal in particular comprise one antenna.

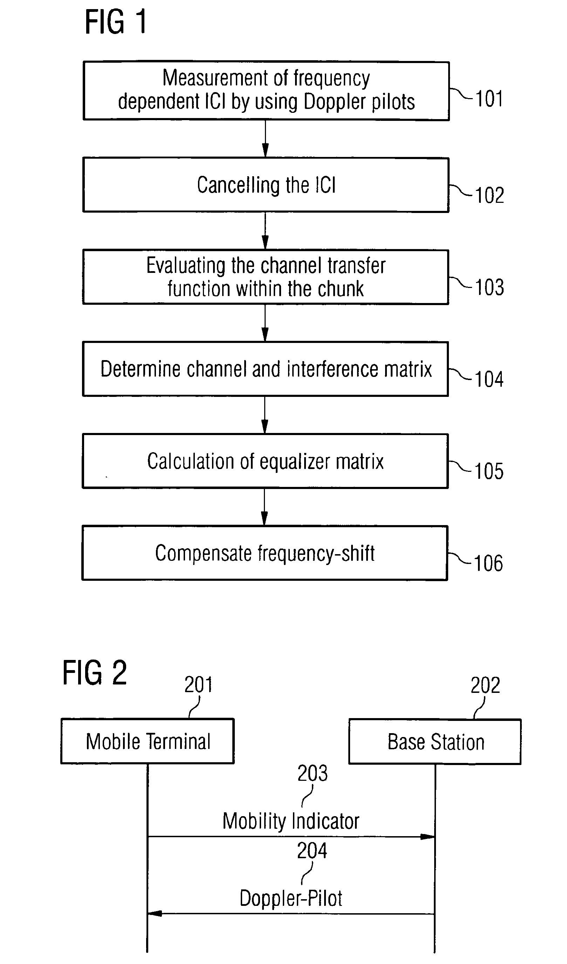

With reference to **Fig. 1**, the proposed approach may comprise the following steps:

1. Measuring (in a step 101) a frequency-dependent Inter-Carrier Interference (ICI) within the chunk caused in particular by a Center Frequency Offset (CFO) and a Doppler spread. Said measurement is performed by using a Doppler pilot.

The signals associated with the Doppler pilot are preferably known to the receiver a priori. The pilot patterns can be defined locally for each resource block.

The measurement can be done after determining the FFT of each receive antenna locally in the frequency domain, where users with significant CFO or Doppler have their allocated resources.

2. Measuring/Evaluating a channel transfer function (step 103) within the chunk after cancelling the ICI of the pilots (step 102).

3. Determining the channel and interference matrix (step 104) for the chunk in the frequency domain based on the ICI obtained from the interference measurement as well as the channel transfer function. This matrix has a diagonal band structure.

4. Calculate an equalizer matrix (step 105) to equalize the channel and to (at least partially) compensate the ICI caused by the Doppler spread.

5. Multiply the received signal after FFT with the equalizer matrix (step 106: Compensation of frequency-shift). This is also done locally (in the frequency domain).

6. If multiple receive antennas are available, maximum ratio combining (MRC) of the multiple equalized received signals may be applied.

Since the ICI mainly affects sub-carriers that are located in the direct neighborhood of the sub-carriers assigned to a (fast) moving user (i.e., the moving mobile terminal), equalization of other users' sub-carriers that are sufficiently separated from the Doppler-degraded sub-carriers can be performed without any need for Doppler compensation.

Furthermore, according to an embodiment, a distinction can be made between down-link transmission from the base station towards the mobile terminal and up-link transmission, i.e. from the mobile terminal towards the base station. As an example, the base station could be deemed to be at a fixed location and not moving.

Then, in the down-link a fast moving user has to compensate Doppler effects on its Resource Blocks (RBs) including adjacent RBs allocated to other users. Therefore, the pilot pattern to measure the Doppler spread may preferably comprise (at least partly) some sub-carriers within the neighboring RBs.

In the up-link, the situation may be considered slightly different from the receiving side at the base station: If the RBs of a fast moving user are scheduled exactly next to a static user, then the sub-carriers of the static user that are adjacent to sub-carriers of the moving user will be affected by the ICI of the fast moving user, but not vice versa. Therefore, the pilot pattern to measure the Doppler spread can advantageously be defined locally for the fast moving user, however it can also be used in a coordinated way together with the adjacent RBs allocated to other users.

**Fig.2** shows a message chart between a Mobile Terminal 201 and a Base Station 202, wherein the Mobile Terminal 201 is moving at a significant speed and thereby produces significant Doppler spread to be compensated.

According to Fig.2 the Mobile Terminal 201 sends a Mobility Indicator 203 to the Base Station 202. This Mobility Indicator 203 may indicate to the Base Station 202 that a SNR value is above a predetermined threshold and hence the channel could be considered to have an adequate quality for high-order QAM modulation. However, due to the Doppler effect, frequency shifts may have to be compensated. As the Base Station 202 also knows that the Mobile Terminal 201 is moving (at a significant speed), it decides to supplement data sent to this particular Mobile Terminal 201 by additional Doppler-Pilot 204 information. This, as described herein allows the Doppler spread and/or the CFO to be (at least partially) compensated.

The pilot pattern or Doppler pilot referred to herein can comprise at least one signal or at least one sequence of signals of various shapes.

In order to successfully estimate the ICI, a suitable pilot pattern (Doppler pilot) has to be employed.

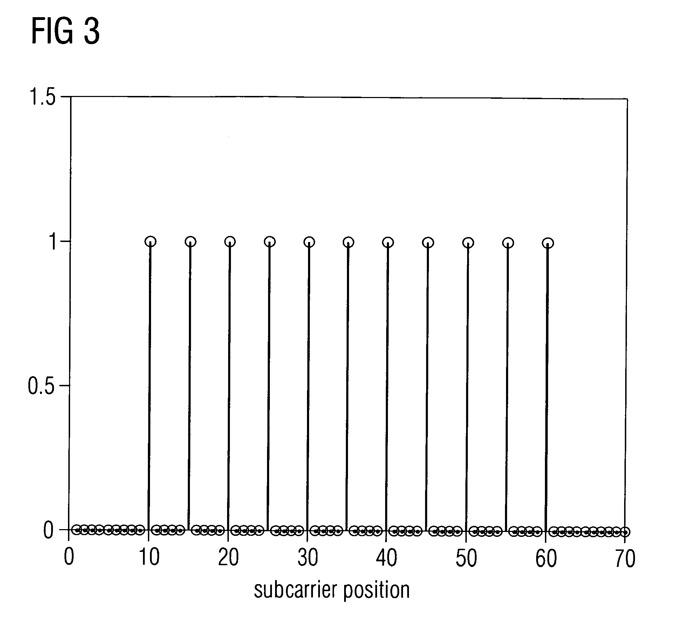

**Fig.3** shows a picture illustrating a signal to be used as a Doppler pilot as a chunk comprising 51 sub-carriers delimited by sub-carrier positions 10 and 61. The signals show a spacing of four sub-carriers.

The following criteria can advantageously be considered in order to design a Doppler pilot for suitable ICI estimation:

1. The Doppler pilot may comprise signals that are defined in the frequency domain and may utilize BPSK or QPSK modulation.

2. The Doppler pilot can be locally defined for the spectrum occupied by the (fast) moving user (this is in particular suitable for the uplink scenario).

3. The Doppler pilot may comprise signals that are transmitted separately from the data transmission in the time domain (i.e., within another OFDM symbol). Using two (several) different time slots may be an option in order to interpolate a temporal variation of the inter-sub-carrier-interference-matrix.

4. The consecutive signals (of the Doppler pilot) may in particular be equidistantly spaced with a spacing of at least two sub-carriers. The larger the spacing, the better an estimation of the ICI may be. This concept also implies that between two pilot signals at least one sub-carrier is not occupied.

5. If applicable, the power per signal (of the Doppler pilot) shall be increased in order to obtain a better (more reliable) measurement of the interference channel. At least the power of the unused sub-carrier should be relocated to the pilots in order to avoid power fluctuations between consecutive OFDM symbols since an autonomous Automatic Gain Control (AGC) may react on this.

6. A scrambling sequence over the pilots signals (of the Doppler pilot) can be used in order to lower a Peak-To-Average Power Ratio (PAPR) of the transmit signal.

7. The special sequence for the Doppler spread measurement has to be transmitted to the (fast) moving instance (e.g., the mobile terminal) or it has to be known by said moving instance in advance, e.g., by utilizing a standardized Doppler pilot.

The measurement of the Inter-Carrier Interference can be implemented as follows:

For ICI estimation, the received signal on the unmodulated sub-carriers is used and the special structure of the frequency selective ICI is utilized.

I(k) is a function describing the interference from the sub-carrier at a frequency position k induced on its direct neighboring sub-carrier at a next position k+1. The interference of this sub-carrier k on its neighbor, which is p sub-carriers spaced apart, may be approximated by

$$1/p \; * \; \mathrm{I(k).,}$$

which is in particular applicable for

$$\mathrm{Doppler \; frequency \; * \; OFDM \; symbol \; duration \; < \; 0.5}$$

Relations are similar for the interference on the sub-carriers at a position k-p, where a function I(f) differs in the algebraic sign only. An interference matrix S hence can be written as

$$S = \begin{bmatrix} 0 & -1 & -1/2 & \cdots \\ 1 & 0 & -1 & -1/2 \\ 1/2 & 1 & \ddots & -1 \\ \vdots & 1/2 & 1 & 0 \end{bmatrix} \cdot \left[ I(k) \right],$$

wherein [I(k)] is a vector comprising elements I(k) and wherein k is an element in C.

During transmission of the pilot symbol, M pilots are transmitted at frequency positions P. The interference is observed at the N frequency positions that remain unmodulated within the pilot symbol, i.e.,

$$N \;=\; C \;\backslash\; P$$

(corresponds to a set C excluding a set P) if C represents the set of available sub-carriers within the chunk.

Hence, the observed interference can be described by taking the N rows of the matrix S at positions C-P and the M columns of the matrix S at positions P, multiplied by a vector x containing all pilots used in the chunk. This yields the reduced matrix S'.

Calculating the pseudo inverse of the reduced matrix S' and multiplying it with the observation vector r (representing the interference observed at the N unmodulated frequency positions) results in an estimate of the function I(k) at the frequency positions P, which can be interpolated by using standard channel interpolation techniques to obtain the function I(k) for the entire chunk.

Channel estimation

The channel transmission model for the chunk can be written as

$$r = (H_D + S) \cdot s + n \,,$$

wherein r is the received signal, s is the transmitted signal, n is a vector of white Gaussian noise and $H_D$ is the diagonal OFDM channel matrix containing the channel transfer function of the chunk.

For channel estimation, reduced versions of matrix $H_D$ and matrix S are used, obtained by extracting the M rows and M columns of the corresponding matrices at positions P only, yielding the equation

$$r' = (H'_D + S') \cdot x + n'$$

for the transmission of the signals of the Doppler pilot contained in x. (r' and n' represent the original vectors r and n reduced to their elements at positions P only.)

For channel estimation purposes, the interference S'x is subtracted from the received signal r' then the channel estimates at the pilot positions are determined.

An interpolation finally results in the channel transfer function for the entire chunk.

Constructing the equalization matrix

For the data transmission phase, the inverse of the matrix ($H_D$+S) that is composed of the interpolated channel transfer function is used together with the interpolated ICI function I(k) in order to compensate (at least a portion of) channel and ICI effects.

It is to be noted that in case a second measurement in a separate time slot is executed, a temporal interpolation of all frequency estimates (ICI function and channel) can be performed. As an alternative, a joint frequency and time interpolation can be considered. Based on this information, an individual equalization matrix can be determined for each transmitted OFDM symbol.

In case a receiver comprises multiple antennas, an equivalent maximum ratio combining (MRC) can be performed by adding the individually equalized received data streams subcarrier-wise according to their individual channel weights.

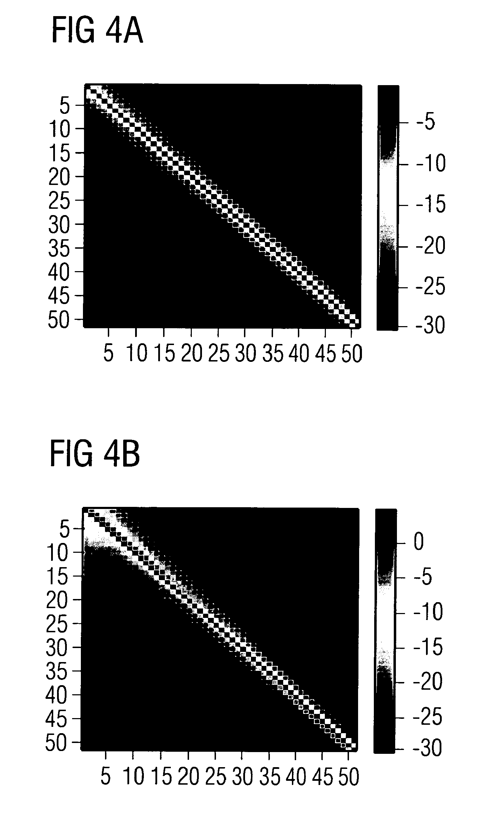

**Fig.4A** illustrates an energy distribution within the channel and interference matrix $H_D$+S obtained in a mobile environment. The mobile terminal is moving at a speed of 300km/h. The scenario comprises a 15kHz sub-carrier spacing and a carrier frequency of 2GHz.

**Fig. 4B** shows an energy distribution within the equalization matrix based on a channel and ICI estimation at a SNR of 40dB (i.e., a noise environment of 30dB and a 10dB boost).

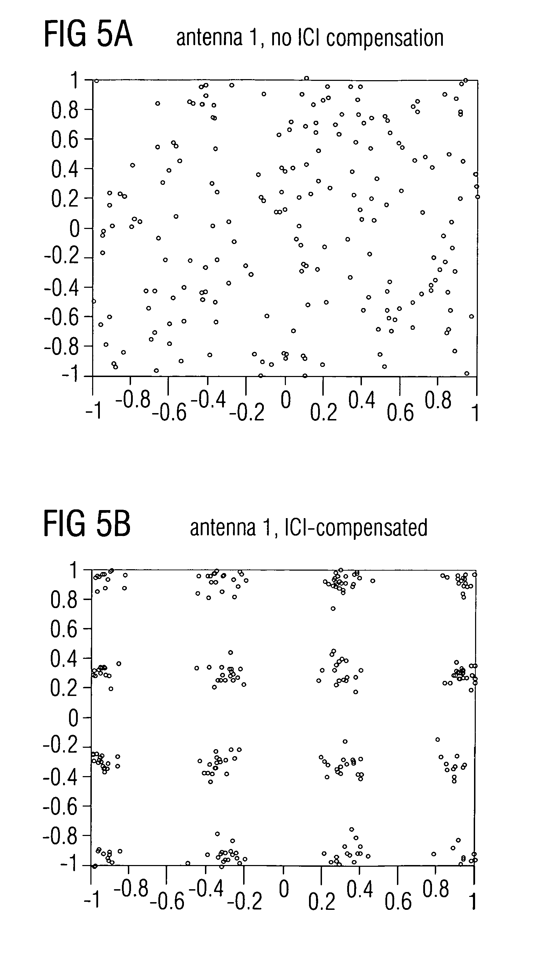

In **Fig.5A** a 16-QAM received signal constellation is visualized after equalization of the channel without compensating the ICI (at a SNR of 30dB). **Fig.5B** shows the 16-QAM received signals after equalization of the channel and compensation of the ICI (at a SNR of 30dB). Clearly, in Fig.5B the constellations in the complex I-Q-plane can be perceived (and hence detected).

Further Applications

Besides an application in cellular OFDM systems like 3GPP-LTE, WiMAX or IEEE 802.20, Digital Video Broadcasting (DVB) services may benefit significantly from this technique. The DVB-T system operates in the UHF Band (470-862MHz) at a system bandwidth of 8MHz, where (in the spectrally efficient mode with large coverage) 8192OFDM sub-carriers are accommodated, resulting in a subcarrier spacing of 1kHz. This relatively small spacing combined with the carrier frequency makes the system susceptible to Doppler effects.

For example, if a mobile user travels at a speed of 150km/h and accesses the DVB service at a carrier frequency of 720MHz, the maximum Doppler frequency is 100Hz, which corresponds to 10% of the subcarrier spacing. This may result in severe ICI, which in general will be significantly frequency selective due to the Doppler spectrum that is generated in an environment with multiple scatterers.

Advantages

a) The approach provided herein significantly reduces ICI and therefore a higher SNR is achieved at a decision unit after equalization.

b) High-order modulation (e.g. 64-QAM) and higher MCS even at high speed and at a significant Doppler spread are applicable.

c) Fast moving users can be allocated next to quasi static users without degrading the slow user.

d) No individual guard bands have to be applied. This makes scheduling more independent from user mobility, because the receiver can handle degrading Doppler effects on its own.

e) The pilot pattern can be conveyed via signaling means or it can be defined in advance, e.g., by standardization.

**Abbreviations (in alphabetical order):**

| | |
|---|---|
| AGC | Automatic Gain Control |
| BPSK | Binary Phase-Shift Keying |
| CFO | Center Frequency Offset |
| FDMA | Frequency-Division Multiple Access |
| FFT | Fast Fourier Transform |
| ICI | Inter-Carrier Interference |
| MIMO | Multiple-Input-Multiple-Output |
| MRC | Maximum Ratio Combining |
| OFDM | Orthogonal Frequency-Division Multiplexing |
| PAPR | Peak-To-Average Power Ratio |
| QAM | Quadrature Amplitude Modulation |

QPSK    Quadrature Phase-Shift Keying
RB      Resource Block
SISO    Single-Input-Single-Output
SNR     Signal-Noise-Ratio

**Claims**

1.  A method for data communication between a first instance and a second instance, wherein the first instance sends a Doppler pilot to the second instance and/or the second instance sends the Doppler pilot to the first instance.

2.  The method according to claim 1, wherein the first instance and the second instance are network elements, in particular a mobile terminal or a base station.

3.  The method according to any of the preceding claims, wherein the Doppler pilot is used to at least partially compensate a frequency shift in particular of sub-carriers.

4.  The method according to any of the preceding claims, wherein the first instance and/or the second instance is/are moving.

5.  The method according to any of the preceding claims comprising the steps that are performed on the first instance or on the second instance:

    - Measuring of an interference by using the Doppler pilot;
    - Calculating an equalizer matrix based on the interference;
    - Applying said equalizer matrix to at least partially compensate frequency shifts.

6.  The method according to any of the preceding claims, wherein sub-carrier blocks are utilized for transmitting the Doppler pilot.

7.  The method according to any of the preceding claims, wherein the Doppler pilot is transmitted on neighboring sub-carriers.

8.  The method according to any of the preceding claims, wherein the Doppler pilot comprises at least one signal to measure an interference, in particular a frequency-dependent inter-carrier interference.

9.  The method according to any of the preceding claims, wherein the Doppler pilot comprises a signal in a frequency domain utilizing BPSK or QPSK modulation.

10. The method according to any of the preceding claims, wherein the Doppler pilot is utilized on a spectrum that is occupied by the first instance or by the second instance.

11. The method according to any of the preceding claims, wherein the Doppler pilot is transmitted separately from user data.

12. The method according to any of the preceding claims, wherein signals of the Doppler pilot have a spacing of at least two sub-carriers.

13. The method according to any of the preceding claims, wherein the amplitude of the Doppler pilot is increased.

14. The method according to any of the preceding claims utilizing a multi-antenna system at the receiving instance.

15. The method according to claim 14, wherein individually equalized received data streams are added per sub-carrier according to channel weights.

16. The method according to any of the preceding claims utilized in an OFDM communication system.

17. A device for data communication comprising a processor unit that is arranged such that the method according of any of the preceding claims is executable on said processor.

18. The device according to claim 17, wherein said device is a communication device, in particular a mobile terminal or a base station.

19. Communication system comprising the device according to any of claims 17 to 18.

# FIG 1

```
┌─────────────────────────────────┐
│     Measurement of frequency     │
│  dependent ICI by using Doppler pilots │ ⟍101
└─────────────────────────────────┘
                 │
                 ▼
┌─────────────────────────────────┐
│         Cancelling the ICI       │ ⟍102
└─────────────────────────────────┘
                 │
                 ▼
┌─────────────────────────────────┐
│    Evaluating the channel transfer │
│     function within the chunk     │ ⟍103
└─────────────────────────────────┘
                 │
                 ▼
┌─────────────────────────────────┐
│  Determine channel and interference matrix │ ⟍104
└─────────────────────────────────┘
                 │
                 ▼
┌─────────────────────────────────┐
│    Calculation of equalizer matrix │ ⟍105
└─────────────────────────────────┘
                 │
                 ▼
┌─────────────────────────────────┐
│      Compensate frequency-shift   │ ⟍106
└─────────────────────────────────┘
```

# FIG 2

201                                         202

┌─────────────────┐         ┌─────────────────┐
│ Mobile Terminal │         │  Base Station   │
└─────────────────┘         └─────────────────┘
         │                           │
         │          203              │
         │     Mobility Indicator    │
         │ ─────────────────────────▶│
         │          204              │
         │      Doppler-Pilot        │
         │◀───────────────────────── │
         │                           │

FIG 3

subcarrier position

## FIG 4A

## FIG 4B

FIG 5A    antenna 1, no ICI compensation

FIG 5B    antenna 1, ICI-compensated

**European Patent Office**

**EUROPEAN SEARCH REPORT**

Application Number

EP 07 01 2857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/159928 A1 (MOSER MARIO [DE]) 21 July 2005 (2005-07-21) | 1-13, 16-19 | INV. H04B7/01 |
| Y | * paragraphs [0001] - [0009], [0017] - [0024], [0037], [0038], [0053], [0178], [0180] - [0182] * | 14,15 | |
| X | US 2002/054621 A1 (KYEONG MUN GEON [KR] ET AL) 9 May 2002 (2002-05-09) | 1,2,4, 10,11, 13,14, 17-19 | |
| Y | * paragraphs [0001], [0009], [0013], [0016] - [0018], [0034] - [0036], [0042] - [0045], [0070] - [0082]; figures 5,12,13 * | 14,15 | |
| X | EP 1 450 497 A (FUJITSU LTD [JP]) 25 August 2004 (2004-08-25) * paragraphs [0001], [0004], [0009], [0010], [0026], [0027], [0030], [0053] - [0059], [0079] - [0089]; figures 13,19 * | 1-13, 16-19 | |

TECHNICAL FIELDS SEARCHED (IPC)

H04B

The present search report has been drawn up for all claims

| Place of search | Date of completion of the search | Examiner |
|---|---|---|
| The Hague | 7 December 2007 | Goethals, Filip |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 07 01 2857

This annex lists the patent family members relating to the patent documents cited in  the above-mentioned European search report.
The members are as contained in the European Patent Office EDP file on
The European Patent Office is in no way liable for these particulars which are merely given for the purpose of information.

07-12-2007

| Patent document cited in search report | | Publication date | Patent family member(s) | | Publication date |
|---|---|---|---|---|---|
| US 2005159928 | A1 | 21-07-2005 | AT<br>AU<br>WO<br>EP | 363773 T<br>2002235904 A1<br>03077445 A1<br>1479176 A1 | 15-06-2007<br>22-09-2003<br>18-09-2003<br>24-11-2004 |
| US 2002054621 | A1 | 09-05-2002 | NONE | | |
| EP 1450497 | A | 25-08-2004 | JP<br>US | 2004274722 A<br>2004190657 A1 | 30-09-2004<br>30-09-2004 |

EPO FORM P0459

For more details about this annex : see Official Journal of the European Patent Office, No. 12/82